# EUROPEAN PATENT APPLICATION

(11) **EP 4 198 381 A1**
(43) Date of publication of application: **21.06.2023**
(21) Application number: 21216021.2
(22) Date of filing: 20.12.2021
(51) Int. Cl.: F21V 9/20, G03B 21/20, H05B 45/20

(54) **LIGHTING DEVICE**

(71) Applicant: CLAY PAKY S.p.A., 24068 Seriate (BG) (IT)
(72) Inventor: ALFIER, Alberto, I-31050 Vedelago (Treviso) (IT); QUADRI, Aris, I-24068 Seriate (Bergamo) (IT)
(74) Representative: Bosotti, Luciano

(57) **Abstract**

A lighting device (10) adapted to be used, for example, in the show and entertainment sector, comprises a light source (100) which in turn includes:
a set (200) of electrically-powered red, green and blue light generators (R1, R2, G, B), wherein the set (200) comprises an alignment of laser light generators (R1, R2, G, B) as well as optical combination elements configured to combine, into a beam of red-green-blue (RGB) light, light produced by the individual laser light generators (R1, R2, G, B) in the set, and wherein the set (200) of laser light generators (R1, R2, G, B) includes a first red light generator (R1) and a second red light generator (R2),
mixing optics (400) configured (300) to receive the beam of RGB light from the set (200) of laser light generators (G, B, R1, R2), and
a diffuser (408), intermediate the set (200) of laser light generators (R1, R2, G, B) and the mixing optics (400) and being traversed by the beam of RGB light.

## Description

### Technical Field

The present description relates to lighting devices.

One or more embodiments may be applied, for example, in the show and entertainment sector.

### Technological Background

In sectors such as, for example, the show and entertainment sector (which is mentioned herein by way of mere example only), there are employed lighting devices adapted to emit high-intensity light radiation.

This may be the case, for instance, of the products commercially available from the Applicant Clay Paky under the trade name XTYLOS (see for instance claypaky. it).

For example, the device named XTYLOS CJ3000 is classified as Laser Class 1 / Risk Group 3, according to IEC 62471 Standard for conventional lights (such as lamps or LEDs). Such a device comprises a moving head with an RGB laser source classified as Laser Class 3B, according to 60825-1 Standard for lasers.

The XTYLOS device is also issued with FDA variance, and therefore it is also available in the US market.

The XTYLOS device includes 8 chips, with a chip emitter in green (G) and blue (B) in 8 laser packages, plus 8 chips, with 2 chip emitters in red (R) in 8 laser packages.

It is desirable to provide a "smaller" version of such a device, by reducing its size so as to make it more compact, with a decrease of the optical power (e.g., 1/8 of the power of the above-mentioned XTYLOS device) and having a simpler internal construction.

The provision of such a smaller version, however, cannot be implemented by simply scaling down the dimensions and the emitting power; on the contrary, it involves various problems arising or becoming more evident with respect to the original solution.

For example:
color mixing of red with green and blue is poor in the near field (in the first 5-10 meters from the fixture);
residual speckles may appear along the projection beam, despite the presence of static diffusers in the mixing tube;
the mixing tube between the two fly's eye groups remains quite long;
the laser engine within the device has a Laser Class 3B, according to 80825-1 Standard, which may pose restrictions in design and maintenance flexibility, and
a residual halo may be present along the beam in projection.

### Object and Summary

One or more embodiments aim at providing a compact lighting device, thus overcoming the previously outlined drawbacks.

According to one or more embodiments, said object may be achieved thanks to a lighting device having the features set forth in the claims that follow.

The claims are an integral part of the technical teachings provided herein with reference to the embodiments.

### Brief Description of the Figures

One or more embodiments will now be described, by way of non-limiting example only, with reference to the annexed Figures, wherein:
Figure 1 is an overview of a lighting device according to embodiments,
Figure 2 is a perspective view of a light source adapted to be mounted in a lighting device as shown in Figure 1, which may be implemented according to embodiments as described herein,
Figure 3 is a function block diagram exemplifying the possible internal architecture of a light source as shown in Figure 2,
Figure 4 is a partially cutaway view showing a possible implementation solution of one of the blocks of Figure 2, and
Figure 5 shows possible implementations which may be employed in a light source as shown in Figure 2.

It will be appreciated that, for clarity and simplicity of illustration, the views in the various Figures may not be drawn to the same scale, the same being true, in possible cases, also for different parts of one and the same Figure.

### Detailed Description of Exemplary Embodiments

In the following description, various specific details are given to provide a thorough understanding of various exemplary embodiments according to the specification. The embodiments may be practiced without one or several specific details, or with other methods, components, materials, etc. In other instances, well-known structures, materials or operations are not shown or described in detail in order to avoid obscuring various aspects of the embodiments.

Reference throughout this specification to "one embodiment" or "an embodiment" means that a particular feature, structure or characteristic described in connection with the embodiment is included in at least one embodiment. Thus, the possible appearances of phrases such as "in one embodiment" or "in an embodiment" in various places throughout this specification are not necessarily all referring exactly to the same embodiment. Furthermore, particular features, structures or characteristics may be combined in any suitable manner in one or more embodiments.

The headings provided herein are for convenience only, and therefore do not interpret the extent of protection or scope of the embodiments.

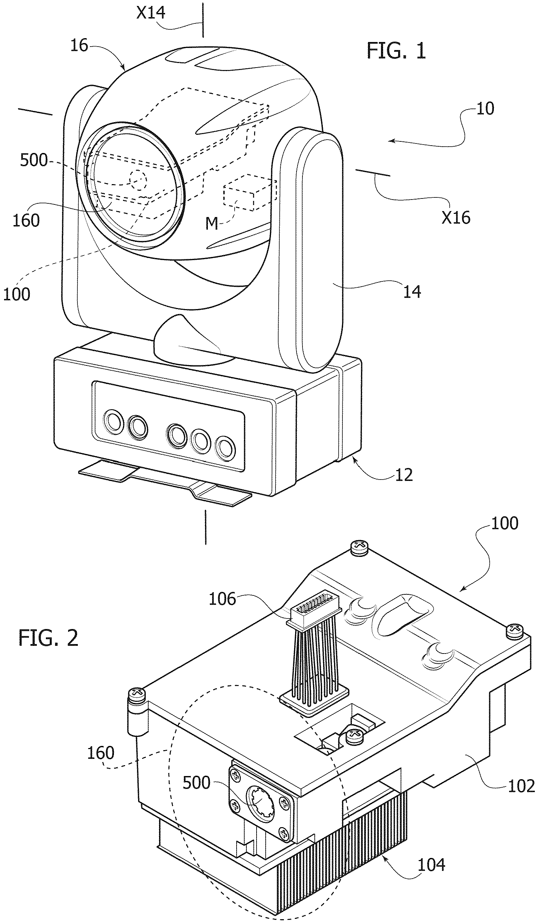

In Figure 1, reference 10 generally denotes a lighting device. It may be for example a lighting device which may be employed in the show and entertainment sector.

This possible sector of use is mentioned herein by way of reference only, and therefore it must not be construed as a limitation to the embodiments.

According to a possible configuration (known in itself), device 10 includes a base 12, which enables the mounting thereof onto a support structure (not visible in the Figures: it may be, e.g., a stage structure in a theatre, a stadium or a venue) and which carries a fork support 14.

The fork support 14 may be oriented, e.g., by 360°, around an axis X14 (which is vertical in Figure 1), and with its arms or prongs it supports a moving head 16 which may be generally oriented with a swinging motion around an axis X16 (which is horizontal in Figure 1).

In head 16 there is mounted a light radiation source adapted to produce a beam of light, which exits head 16 through a front aperture 160.

The combined movement around axes X14 and X16, which is controlled by motors arranged, for example, in the base 12 and in the fork support 14 (or in the head 16) causes the beam of light projected through front aperture 160 to perform a scanning movement adapted to sweep a volume larger than a half-space.

Reference M in Figure 1 shows one or more motors (cooling fan and/or scanning motors) which may originate vibrations, adapted to be advantageously used as explained in the following.

As stated in the foregoing, the overall structure of a device 10 and the execution of said scanning movement are to be considered known in themselves from the state of the art (e.g., from the XTYLOS device which has been mentioned in the introduction to the present description), which makes it unnecessary to provide more detailed information in the context of the present disclosure.

The present description mainly concerns the structure of the light radiation source 100 which is to be mounted into head 16, as schematically shown by the contour of aperture 160, shown in dashed lines in Figure 2.

Figure 2 shows a housing 102 of source 100, which is provided with a heat sink 104 and with a sealing connector (e.g., of IP 65 grade) for the electrical connection of the light radiation generators which are present in the source and of the components associated therewith, as will be further detailed in the following.

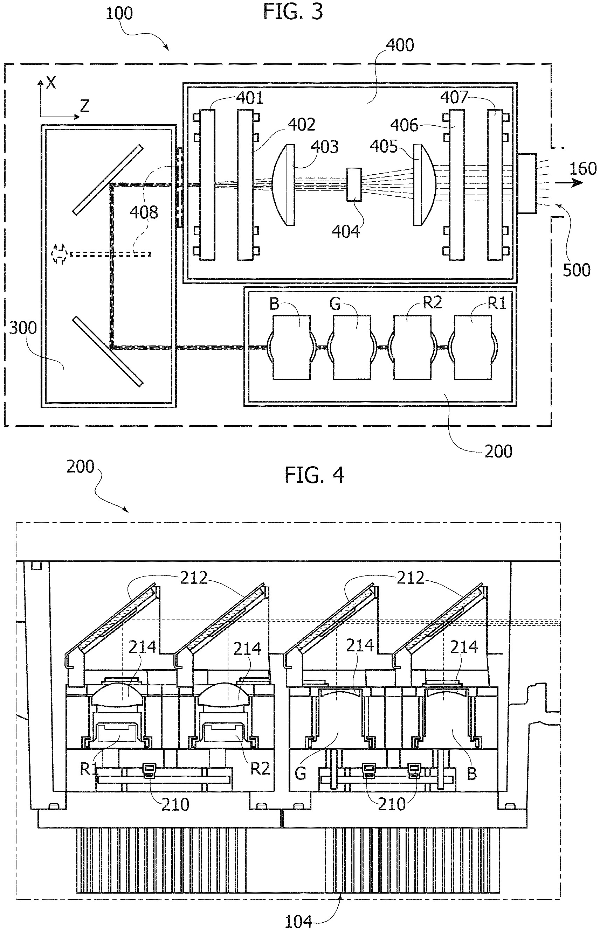

As shown in Figure 3, in one or more embodiments, in source 100 there are provided, arranged in cascade in the path towards the aperture outputting radiation 160:
a set of electrically-powered light radiation generators, denoted as 200,
a set of folding mirrors 300,
mixing optics 400, and
a (negative) exit lens 500, which faces towards the radiation output aperture 160.

As shown in Figure 3, in one or more embodiments, the set of light radiation generators includes a bank of laser generators, e.g., RGB (red, green, blue) laser diodes which are aligned and mixed.

As shown in Figure 3, set 200 optionally (but not necessarily) comprises, in the presently described order along the propagation direction of radiation, from right to left in the Figure:
two lasers emitting in the red range, denoted as R1 and R2,
one laser emitting in the green range, denoted as G,
one laser emitting in the blue range, denoted as B.

In Figure 4, wherein the direction of light propagation is from left to right, it is possible to see the four lasers R1, R2, G, B which are mounted - according to a technique, e.g., SMT, known in itself - with thermal coupling with heatsink 104 via thermal pads 210 and a thermally conductive adhesive, optionally with the provision of NCT (negative temperature coefficient) resistors.

In order to combine the radiations emitted by lasers R1, R2, G, B and originate an RGB (Red-Green-Blue) radiation, it is at least theoretically possible to resort to different solutions.

For instance, Figure 4 shows - by way of example - the possibility of using mirrors 212 acting as dichroic filters, adapted to transmit or reflect light according to the wavelength thereof, so that the first mirror 212 (on the extreme left side in Figure 4) reflects the radiation coming from generator R2, and the other three mirrors 212 (the second, the third and the fourth going from left to right) reflect the radiation respectively coming from generators R2, G, B, and transmit (i.e. allow the passage of) the radiation coming "from behind".

The combination of the radiation emitted by both red generators R1 and R2 may be achieved according to the criteria outlined in the foregoing by employing two generators (laser diodes) both operating in the red range but having slightly different wavelengths, e.g., with a difference of few nm, so that the second dichroic filter 212 allows the passage of one wavelength coming from behind (coming from generator R1 and reflected by the first mirror 212) and reflects the other (the wavelength coming from generator R2).

Such an embodiment is advantageous as regards costs. Moreover, such a solution does not require the radiations of generators R1 and R2 to necessarily have mutually perpendicular polarizations.

The use of generators R1 and R2 having mutually different polarizations, albeit not mandatory, is however useful for obtaining a more homogeneous output beam.

In order to combine the radiations emitted by the lasers it is also possible to employ plate beam splitters (having a shape substantially similar to the mirrors 212 shown in Figure 4). Such a beam splitter may be considered as a mirror sensitive to polarization, being adapted e.g., to reflect one polarization and to allow the passage of another.

This involves the fact that the radiations of generators R1 and R2 have mutually perpendicular polarizations.

The use of a cube beam splitter lends itself to similar considerations.

Whatever the solution adopted for the combination of the radiation may be, the use of two generators in the red range, i.e. R1 and R2, offers the advantage of providing so to say a twofold power.

In this way it is possible to take into account the fact that:
a red laser diode may be particularly sensitive to temperature, the emission intensity being susceptible to decrease as much as by 50% in standard operation, as opposed to a decrease by 10% in corresponding blue and green generators, and
the emission intensity of a red laser diode is susceptible to decrease to a larger extent and more rapidly during the service life of the generator, due to temperature and current.

Therefore, the use of two red generators, i.e. R1 and R2, offers the advantage of the availability of a higher flux. This enables reducing (practically halving) the power of each generator, which, undergoing less stress, exhibits a longer service life.

It is also possible to envisage the presence of collimation lenses 214 (which may be adjusted with a small screwdriver) in order to influence the radiation distribution in the near field and in the far field.

Referring back to Figure 3, the set of folding mirrors 300 may include, for example, two mirrors arranged at 90° one with respect to the other, the first mirror (input mirror, facing towards the set of radiation generators 200) being oriented at 45° with respect to the emission axis of the RGB radiation from the laser bank 200.

The RGB radiation reflected by this first mirror impinges on the second mirror (the output mirror, facing towards mixing optics 400), with the consequent possibility of overlapping the optical axis of propagation of the beam of RGB radiation coming from the laser bank 200 onto the mixing optical axis 400.

The set of mirrors 300 moreover imparts to the beam of RGB radiation produced by the laser bank 200 a U-turn (inversion of the propagation direction), which is advantageous for keeping the overall size of source 100 and therefore of device 10 small.

As shown in Figure 3, in one or more embodiments the mixing optics 400 comprises the following elements:
401, 402: first fly's eye pair;
403, 404 and 405: optical relay system; and
406, 407: second fly's eye pair.

Substantially, the mixing optics 400 is adapted to achieve (according to criteria known in themselves) an image 1:1 from the first fly's eye 401, 402 to the second fly's eye 406, 407, and in order to do so it uses two mutually facing plano-convex lenses, i.e. 403, 405, with a negative lens 404 which reduces the length of the mixing optics 400.

One or embodiments envisage the use of a diffuser 408, adapted to reduce the speckle effects in projection.

The diffuser may be positioned, for example,
between the two mirrors 300, as shown in Figure 3 with a dashed line,
between the set of folding mirrors 300 and the mixing optics 400, as shown in Figure 4 with a dash-dotted line.

By being in any case positioned upstream of the first fly's eye pair 401, 402 downstream of the laser bank 200 and by mainly operating in the red region, diffuser 408 reduces the speckle effects.

It has been observed that it is advantageous to implement the diffuser 408 as a moving (e.g., vibratory) element, as schematically indicated by a double arrow in Figure 3, with an effect which can be already observed with a manual handling.

It has been observed, moreover, that the results improve with the increase of the vibration frequency and with the increase of the amplitude (excursion) of the vibratory movement, the frequency and the amplitude of the vibration being adapted to decrease as the power increases, but with a lower efficiency.

Suitable results may be achieved with vibration frequencies of a few tens of Hz and with amplitudes of at least one tenth of a mm.

The vibration must not necessarily be regular or periodic: it may be imparted randomly, e.g., by keeping the amplitude value of at least 1 tenth of a mm.

For example, it may be possible to implement diffuser 408 by resorting to an electric mini-motor (not visible in the Figures) which rotates an eccentric mass thus creating small vibrations at each turn of the motor. Such solutions are employed e.g., in mobile phones to inform about an incoming call or about a message when the ringer is off.

It is also possible to implement diffuser 408 as a motorized rotating element (however increasing the overall size), or else, according to a solution advantageous in terms of cost, to mount the diffuser onto a spring system, thus making use of the natural vibration of device 10 induced by the fan and/or by motors already present in the device 10 itself (as schematically denoted with M in Figure 1).

In other words, one or more embodiments may take advantage of the ability of moving head 16 itself to vibrate, due to the activation of a source of vibration (e.g., M) coupled thereto, by mounting diffuser 408 floatingly (e.g., on springs), thus enabling the diffuser to vibrate due to the activation of said source of vibration.

As regards the diffusive power of diffuser 408, advantageous values amount to at least 0,25° FWHM, optionally being included in the range between 1° and 3°.

It will be observed that solutions such as exemplified in Figure 3 may mount, upstream of the first fly's eye pair 401, 402, a baffle (not visible in the Figure for clarity of illustration) in order to reduce stray light from diffuser 408 and counter the appearance of an undesirable halo in the beam.

The light beam exiting mixing optics 400 may be collimated in an aperture range of 1° - 5° by using a system of lenses comprising both negative (diverging) and positive (converging) lenses.

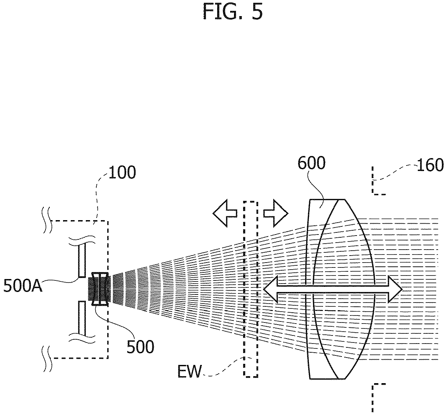

As shown in Figure 3, a first (negative) lens of the afocal system may be a negative lens 500 which is part of source 100. This solution makes the light source 100 safer, because (as exemplified on the left in Figure 5) the beam output from source 100 is diverging.

The exiting beam being a diverging beam, if the lens 500 is included in source 100 (see also Figure 2), makes source 100 intrinsically safe from a photo-biologic point of view, making the maintenance of device 10 easier.

Upstream of lens 500, moreover, a baffle 500A may be mounted in order to reduce stray light.

Figure 5 shows a solution which may be adopted to adjustably collimate the light beam exiting mixing optics 400.

For example, as exemplified in Figure 5, it is possible to move, by known means, a frontal (positive) lens 600 of the afocal system, i.e. the outermost lens facing aperture 160.

Moreover, Figure 5 exemplifies the optional possibility of mounting, between lenses 500 and 600, a rotatable effect wheel EW. The wheel carries a plurality of prisms which are adapted to be selectively interposed in the propagation path of the radiation, according to the position taken by wheel EW. Each prism is rotatable around its own axis, as in a standard moving head.

As indicated by a double arrow in Figure 5, wheel EW may also be moved back and forth, in order to vary the beam aperture.

One or more embodiments as exemplified herein offer a valuable solution to various drawbacks outlined in the introductory section of the present disclosure.

Specifically, the use in laser bank 200 of two lasers R1 and R2 operating in the red range helps mixing red with green and blue, primarily in the near field.

Diffuser 408 (which may optionally be vibratory) effectively counters the appearance of residual speckles along the beam and in projection.

The central lenses 403, 404, 405 of optics 400 enable reducing the size of the mixing tube and, together with the set of mirrors 300, the overall size of device 100.

The negative exit lens 500, which produces a diverging beam at the exit of source 100 (aperture 160) makes the source safe even during maintenance.

The effect wheel EW, with rotating prisms in the exit optics 500, 600, and/or baffle 500A counter the undesirable presence of residual halos.

In short, a lighting device (e.g., 10) as illustrated herein comprises a light source (e.g., 100), wherein the light source may include:
a set (e.g., 200) of electrically-powered red, green and blue light generators, wherein the set comprises an alignment of laser light generators (e.g., R1, R2, G, B) as well as optical combination elements (e.g., 212) configured to combine, into a beam of red-green-blue (RGB) light, the light produced by the individual laser light generators in the set, and wherein the set of laser light generators includes a first red light generator (e.g., R1) and a second red light generator (e.g., R2),
mixing optics (e.g., 400) configured (e.g., via mirrors 300) to receive the RGB light beam from the set of laser light generators, and
a diffuser (e.g., 408) intermediate the set of laser light generators and the mixing optics, wherein the diffuser is traversed by the beam of RGB light.

In a lighting device as illustrated herein:
the first red light generator is configured to produce red light with a first wavelength and the second red light generator is configured to produce red light with a second wavelength, the second wavelength being different (e.g., by a few nm) from the first polarization, and/or
the first red light generator may be configured to produce red light with a first polarization and the second red light generator may be configured to produce red light with a second polarization, the second polarization being perpendicular to the first polarization.

In a lighting device as illustrated herein, the diffuser may be a vibratory diffuser.

In a lighting device as illustrated herein, the vibratory diffuser may be configured to vibrate with a vibration amplitude of at least 1/10 mm and/or at a frequency of a few tens of Hz.

In a lighting device as illustrated herein, the diffuser may have a diffusive power of at least 0.25° FWHM.

In a lighting device as illustrated herein, the first and second red light generators may be located upstream of the green and blue light generators in said alignment of laser light generators.

A lighting device as illustrated herein may comprise a folding mirror assembly (e.g., 300) intermediate the set of laser light generators and the mixing optics, the folding mirror assembly being configured to align with the mixing optics the beam of RGB light from the set of laser light generators as a result of U-turn imparted to the propagation path of the beam of RGB light from the set of laser light generators.

In a lighting device as illustrated herein, the diffuser may be included in or arranged downstream of the folding mirror assembly (see the representations in dashed line and in dot-dashed line in Figure 3).

In a lighting device as illustrated herein, the mixing optics may include a central optical relay system (e.g., 403, 404, 405).

A lighting device as illustrated herein may comprise an output collimation system (e.g., 500, 600) configured to collimate the beam of RGB light at the output of the mixing optics, the output collimation system being adapted to comprise a negative lens (e.g., 500) arranged at a light emission aperture of the light source and configured to be traversed by the beam of RGB light exiting the mixing optics and to convert into a diverging light beam the beam of RGB light exiting the light source.

A lighting device as illustrated herein may comprise a baffle (e.g., 500A) coupled to said negative lens, to counter propagation of stray light from the light source.

In a lighting device as illustrated herein, the output collimation system may comprise an effect wheel (e.g., EW) carrying a plurality of rotating prisms configured to be selectively interposed in the path of the beam of RGB light exiting the light source (100) as a result of rotation of the effect wheel.

A lighting device as illustrated herein may comprise:
a mounting structure (e.g., 12, 14),
a moving head (e.g., 16) carried by the mounting structure, rotatable around at least one rotation axis (e.g., X14, X16),
wherein the light source is arranged in said moving head.

In a lighting device as illustrated herein:
said moving head is subject to vibration in response to activation of a source of vibration (e.g., fan and/or orientation motors, M) coupled therewith, and
said diffuser (e.g., 408) may be mounted floating (e.g., via spring elements) in the light source arranged in said moving head, therefore being subject to vibration in response to activation of said source of vibration.
Without prejudice to the basic principles, the implementation details and the embodiments may vary, even appreciably, with respect to what has been described herein by way of non-limiting example only, without departing from the extent of protection.

The extent of protection is defined by the annexed claims.

**LIST OF REFERENCE SIGNS**

| | |
|---|---|
| Device | 10 |
| Base | 12 |
| Fork-shaped support | 14 |
| Orientation axis | X14 |
| Moving head | 16 |
| Orientation axis | X16 |
| Aperture | 160 |
| Lighting source | 100 |
| Housing | 102 |
| Heat sink | 104 |
| Connector | 106 |
| Laser bank | 200 |
| Red laser 1 | R1 |
| Red laser 2 | R2 |
| Green laser | G |
| Blue laser | B |
| Semi-transparent mirrors | 212 |
| Collimation lenses | 214 |
| Folding mirrors | 300 |
| Mixing optics | 400 |
| First fly's eye pair | 401, 402 |
| Relay optical system | 403, 404, 405 |
| Second fly's eye pair | 406, 407 |
| Diffuser | 408 |
| Negative lens | 500 |
| Baffle | 500A |
| Positive lens | 600 |
| Effect wheel | EW |

## Claims

1. A lighting device (10), comprising a light source (100), wherein the light source (100) includes:
a set (200) of electrically-powered red, green and blue light generators (R1, R2, G, B), wherein the set (200) comprises an alignment of laser light generators (R1, R2, G, B) as well as optical combination elements (212) configured to combine into a beam of red-green-blue, RGB light, light produced by the individual laser light generators (R1, R2, G, B) in the set and wherein the set (200) of laser light generators (R1, R2, G, B) includes a first red light generator (R1) and a second red light generator (R2),
mixing optics (400) configured (300) to receive the RGB light from the set (200) of laser light generators (G, B, R1, R2),
a diffuser (408) intermediate the set (200) of laser light generators (R1, R2, G, B) and the mixing optics (400), wherein the diffuser (408) is traversed by the beam of RGB light.

2. The lighting device (10) of claim 1, wherein:
the first red light generator (R1) is configured to produce red light with a first wavelength and the second red light generator (R2) is configured to produce red light with a second wavelength, the second wavelength being different from the first wavelength, and/or
the first red light generator (R1) is configured to produce red light with a first polarization and the second red light generator (R2) is configured to produce red light with a second polarization, the second polarization being perpendicular to the first polarization.

3. The lighting device (10) of claim 1 or claim 2, wherein the diffuser (408) is a vibratory diffuser.

4. The lighting device (10) of claim 3, wherein the vibratory diffuser (408) is configured to vibrate with vibration amplitude of at least 1/10 mm and/or at a frequency of a few tens of Hz.

5. The lighting device (10) of any of the previous claims, wherein the diffuser (408) has a diffusive power of at least 0.25° FWHM.

6. The lighting device (10) of any of the previous claims, wherein the first (R1) and second (R2) red light generators are located upstream of the green (G) and blue (B) light generators in said alignment of laser light generators (R1, R2, G, B).

7. The lighting device (10) of any of the previous claims, comprising a deflector mirror assembly (300) intermediate the set (200) of laser light generators (R1, R2, G, B) and the mixing optics (400), the deflector mirror assembly (300) configured to align with the mixing optics (400) the beam of RGB light from the set (200) of laser light generators (R1, R2, G, B) as a result of U-turn imparted to the propagation path of the beam of RGB light from the set (200) of light generators (R1, R2, G, B).

8. The lighting device (10) of claim 7, wherein the diffuser (408) is included in or arranged downstream of the deflector mirror assembly (300).

9. The lighting device (10) of any of the previous claims, wherein the mixing optics (400) includes a central optical relay system (403, 404, 405).

10. The lighting device (10) of any of the previous claims, comprising an output collimation system (500, 600) configured to collimate the beam of RGB light at the output of the mixing optics (400), the output collimation system (500, 600) comprising a negative lens (500) arranged at a light emission aperture of the light source (100) and configured to be traversed by the beam of RGB light from the mixing optics (400) and convert into a diverging light beam the beam of RGB light exiting the light source (100).

11. The lighting device (10) of claim 10, comprising a baffle (500A) coupled to said negative lens (500) to counter propagation of stray light from the light source (100).

12. The lighting device (10) of claims 10 or claim 11, wherein the output collimation system (500, 600) comprises an effect wheel (EW) carrying a plurality of rotating prisms configured to be selectively interposed in the propagation path of the beam of RGB light exiting the light source (100) as a result of rotation of the effect wheel (EW).

13. The lighting device (10) of any of the previous claims, comprising:
a mounting structure (12, 14),
a moving head (16) carried by the mounting structure (12, 14) rotatable around at least one rotation axis (X14, X16),
wherein the light source (100) is arranged in said moving head (16).

14. The lighting device (10) of claim 13 inasmuch as dependent on claim 3 or claim 4, wherein
said moving head (16) is subject to vibration in response to activation of a source of vibration (M) coupled therewith,
said diffuser (408) is mounted floating in the light source (100) arranged in said moving head (16) and subject to vibration in response to activation of said source of vibration (M).
